(19) Europäisches Patentamt
European Patent Office
Office européen des brevets

(11) EP 4 600 045 A1

(12) EUROPEAN PATENT APPLICATION
published in accordance with Art. 153(4) EPC

(43) Date of publication:
**13.08.2025 Bulletin 2025/33**

(21) Application number: **23874669.7**

(22) Date of filing: **21.09.2023**

(51) International Patent Classification (IPC):
***B41M 5/00*** (2006.01) ***B32B 27/00*** (2006.01)
***B32B 27/30*** (2006.01) ***B32B 38/14*** (2006.01)
***B41J 2/01*** (2006.01) ***C08F 2/44*** (2006.01)
***C08F 220/10*** (2006.01) ***C08J 7/04*** (2020.01)
***C09D 11/30*** (2014.01) ***C09D 11/38*** (2014.01)

(52) Cooperative Patent Classification (CPC):
**B32B 27/00; B32B 27/30; B32B 38/14; B41J 2/01; B41M 5/00; C08F 2/44; C08F 220/10; C08J 7/04; C09D 11/30; C09D 11/38**

(86) International application number:
**PCT/JP2023/034359**

(87) International publication number:
**WO 2024/075540 (11.04.2024 Gazette 2024/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2022 JP 2022162750**
**30.06.2023 JP 2023108852**

(71) Applicant: **FUJIFILM Corporation**
**Tokyo 106-8620 (JP)**

(72) Inventors:
- **SHIRAKI, Fumiya**
**Ashigarakami-gun, Kanagawa 258-8577 (JP)**
- **ISHIZAKA, Soji**
**Ashigarakami-gun, Kanagawa 258-8577 (JP)**
- **UMEBAYASHI, Tsutomu**
**Ashigarakami-gun, Kanagawa 258-8577 (JP)**

(74) Representative: **Klunker IP**
**Patentanwälte PartG mbB**
**Destouchesstraße 68**
**80796 München (DE)**

# (54) METHOD FOR PRODUCING LAMINATED BODY, INKJET INK, AND IMAGE RECORDING METHOD

(57) Provided are a manufacturing method of a laminate, including a step of applying an ink onto a base material for image recording, which contains a polymer including vinyl chloride as a constitutional unit, by an ink jet recording method to record an image, and a laminating step of disposing a base material for lamination, which contains a polymer including vinyl chloride as a constitutional unit, over the image, in which the ink contains a polymerizable monomer A having a molecular weight of 215 or less, having a solubility parameter of 16.5 $MPa^{1/2}$ to 21.3 $MPa^{1/2}$ , and having a (meth)acryloyl group, and contains an N-vinyl compound, and a weighted average value of glass transition temperatures in a case where all polymerizable monomers contained in the ink are homopolymers is 0°C to 100°C; and applications thereof.



Processed by Luminess, 75001 PARIS (FR)

## Description

### BACKGROUND OF THE INVENTION

1. Field of the Invention

The present disclosure relates to a manufacturing method of a laminate, an ink jet ink, and an image recording method.

2. Description of the Related Art

In the related art, various examinations have been conducted on image recording carried out using an ink.

For example, JP2021-161182A discloses an ink composition which is an active energy ray curable-type ink composition containing (A) a polymerizable compound, (B) a photopolymerization initiator, and (C) an ultraviolet absorber and/or (D) a radical scavenger, in which the (A) polymerizable compound includes a monofunctional polymerizable compound and a polyfunctional polymerizable compound, and the monofunctional polymerizable compound includes at least one monofunctional polymerizable compound (a) selected from the group consisting of a monofunctional polymerizable compound (a-1) which has a molecular weight of 250 g/mol or less and a melting point of 25°C or higher, a monofunctional polymerizable compound (a-2) which has a molecular weight of 250 g/mol or less, a melting point of lower than 25°C, and a viscosity of 20 mPa·s or more at 25°C, and a monofunctional polymerizable compound (a-3) other than the monofunctional polymerizable compound (a-1) and the monofunctional polymerizable compound (a-2), which has an amide group and a cyclic structure.

### SUMMARY OF THE INVENTION

In a case where an image is recorded on a base material for image recording, which contains a polymer (for example, polyvinyl chloride) including vinyl chloride as a constitutional unit, to obtain an image recorded material, a laminate may be manufactured by laminating a base material for lamination, containing the polymer including vinyl chloride as a constitutional unit, over the image in the image recorded material. In this case, it is required to improve adhesiveness between the base material for image recording and the image and adhesiveness between the image and the base material for lamination.

The present disclosure has been made in view of such circumstances, and an object to be achieved by one embodiment of the present disclosure is to provide a manufacturing method of a laminate having excellent adhesiveness between a base material containing a polymer including vinyl chloride as a constitutional unit and an image.

An object to be achieved by another embodiment of the present disclosure is to provide an ink jet ink which is capable of recording an image having excellent adhesiveness with a base material containing a polymer including vinyl chloride as a constitutional unit.

An object to be achieved by still another embodiment of the present disclosure is to provide an image recording method which is capable of recording an image having excellent adhesiveness with a base material containing a polymer including vinyl chloride as a constitutional unit.

The present disclosure includes the following aspects.

<1> A manufacturing method of a laminate, including:

a step of applying an ink onto a base material for image recording, which contains a polymer including vinyl chloride as a constitutional unit, by an ink jet recording method to record an image; and

a laminating step of disposing a base material for lamination, which contains a polymer including vinyl chloride as a constitutional unit, over the image,

in which the ink contains a polymerizable monomer A having a (meth)acryloyl group, having a molecular weight of 215 or less, and having a solubility parameter of 16.5 $MPa^{1/2}$ to 21.3 $MPa^{1/2}$ , and contains an N-vinyl compound, and

a weighted average value of glass transition temperatures in a case where all polymerizable monomers contained in the ink are homopolymers is 0°C to 100°C.

<2> The manufacturing method of a laminate according to <1>,
in which a mass ratio of a content of the N-vinyl compound to a content of the polymerizable monomer A is 0.35 or more.

<3> The manufacturing method of a laminate according to <1> or <2>,

in which a mass ratio of a content of the N-vinyl compound to a content of the polymerizable monomer A is 0.5 or more.

<4> The manufacturing method of a laminate according to any one of <1> to <3>,

in which a proportion of a polymerizable monomer having a molecular weight of 205 or less with respect to all polymerizable compounds contained in the ink is 80% by mass or more.

<5> The manufacturing method of a laminate according to any one of <1> to <4>,

in which a proportion of a monofunctional polymerizable compound with respect to all polymerizable compounds contained in the ink is 90% by mass or more.

<6> The manufacturing method of a laminate according to any one of <1> to <5>,

in which the polymerizable monomer A includes at least one selected from the group consisting of cyclic trimethylolpropane formal acrylate and ethoxydiethylene glycol acrylate.

<7> The manufacturing method of a laminate according to any one of <1> to <6>,

in which the ink further contains at least one selected from the group consisting of a vinyl chloride-vinyl acetate copolymer and a polyester resin.

<8> The manufacturing method of a laminate according to any one of <1> to <6>,

in which the ink further contains a resin T which includes at least one group selected from the group consisting of a fluorinated hydrocarbon group, a polysiloxane group, and a hydrocarbon group having 12 or more carbon atoms.

<9> The manufacturing method of a laminate according to <8>,

in which the resin T includes a constitutional unit derived from a polymerizable monomer having a solubility parameter of 16.5 $MPa^{1/2}$ to 24.0 $MPa^{1/2}$.

<10> The manufacturing method of a laminate according to any one of <1> to <9>,

in which the ink contains no surfactant, or a content of a surfactant is less than 0.1% by mass with respect to the total amount of the ink.

<11> The manufacturing method of a laminate according to any one of <1> to <10>,

in which, in the laminating step, the image and the base material for lamination are subjected to thermocompression bonding at a temperature of 100°C or higher.

<12> The manufacturing method of a laminate according to any one of <1> to <11>,

in which, in the laminating step, the image and the base material for lamination are laminated to be superimposed on each other such that the image and the base material for lamination come into contact with each other.

<13> An ink jet ink comprising:

a polymerizable monomer A which has a (meth)acryloyl group, has a molecular weight of 215 or less, and has a solubility parameter of 16.5 $MPa^{1/2}$ to 21.3 $MPa^{1/2}$; and
an N-vinyl compound,
in which a weighted average value of glass transition temperatures in a case where all polymerizable monomers contained in the ink jet ink are homopolymers is 0°C to 100°C, and
a mass ratio of a content of the N-vinyl compound to a content of the polymerizable monomer A is 0.35 or more.

<14> The ink jet ink according to <13>,

in which the mass ratio of the content of the N-vinyl compound to the content of the polymerizable monomer A is 0.5 or more.

<15> The ink jet ink according to <13> or <14>,

in which a proportion of a polymerizable monomer having a molecular weight of 205 or less with respect to all polymerizable compounds contained in the ink jet ink is 80% by mass or more.

<16> The ink jet ink according to any one of <13> to <15>,

in which a proportion of a monofunctional polymerizable compound with respect to all polymerizable compounds contained in the ink jet ink is 90% by mass or more.

<17> The ink jet ink according to any one of <13> to <16>,

in which the polymerizable monomer A includes at least one selected from the group consisting of cyclic trimethylolpropane formal acrylate and ethoxydiethylene glycol acrylate.

<18> The ink jet ink according to any one of <13> to <17>, further containing:

at least one selected from the group consisting of a vinyl chloride-vinyl acetate copolymer and a polyester resin.

<19> The ink jet ink according to any one of <13> to <18>, further containing:

a resin T including at least one group selected from the group consisting of a fluorinated hydrocarbon group, a polysiloxane group, and a hydrocarbon group having 12 or more carbon atoms.

<20> The ink jet ink according to <19>,

in which the resin T includes a constitutional unit derived from a polymerizable monomer having a solubility parameter of 16.5 $MPa^{1/2}$ to 24.0 $MPa^{1/2}$.

<21> The ink jet ink according to any one of <11> to <16>,

in which the ink jet ink contains no surfactant, or a content of a surfactant is less than 0.1% by mass with respect to the total amount of the ink jet ink.

<22> An image recording method comprising:

a step of applying the ink jet ink according to any one of <13> to <21> onto a base material for image recording, which contains a polymer including vinyl chloride as a constitutional unit, by an ink jet recording method to record an image.

According to one embodiment of the present disclosure, there is provided a manufacturing method of a laminate having excellent adhesiveness between a base material containing a polymer including vinyl chloride as a constitutional unit and an image.

According to another embodiment of the present disclosure, there is provided an ink jet ink which is capable of recording an image having excellent adhesiveness with a base material containing a polymer including vinyl chloride as a constitutional unit.

According to still another embodiment of the present disclosure, there is provided an image recording method which is capable of recording an image having excellent adhesiveness with a base material containing a polymer including vinyl chloride as a constitutional unit.

## DESCRIPTION OF THE PREFERRED EMBODIMENTS

Hereinafter, the manufacturing method of a laminate, the ink jet ink, and the image recording method according to the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, "image" denotes an entire film formed by applying a pretreatment liquid and an ink in this order, and "image recording" denotes formation of the image (that is, the film).

In addition, the concept of "image" in the present specification also includes a solid image.

In the present specification, "(meth)acrylate" is a concept including both acrylate and methacrylate. **In** addition, "(meth)acryl" is a concept that includes both acryl and methacryl.

[Manufacturing method of laminate]

The manufacturing method of a laminate according to the present disclosure includes a step (hereinafter, also referred to as "image recording step") of applying an ink onto a base material for image recording, which contains a polymer including vinyl chloride as a constitutional unit, by an ink jet recording method to record an image, and a step (hereinafter, also referred to as "laminating step") of disposing a base material for lamination, which contains a polymer including vinyl chloride as a constitutional unit, over the image for lamination, in which the ink contains a polymerizable monomer A having a molecular weight of 215 or less, having a solubility parameter of 16.5 $MPa^{1/2}$ to 21.3 $MPa^{1/2}$, and having a (meth)acryloyl group, and contains an N-vinyl compound, and a weighted average value of glass transition temperatures in a case where all polymerizable monomers contained in the ink are homopolymers is 0°C to 100°C.

With the manufacturing method of a laminate according to the present disclosure, a laminate including a base material for image recording, an image recorded on the base material for image recording, and a base material for lamination disposed over the image in this order can be obtained. The laminate obtained by the manufacturing method of a laminate according to the present disclosure has excellent adhesiveness between the base material for image recording and the image, and adhesiveness between the image and the base material for lamination.

The reason why the above-described effects are exhibited by the manufacturing method of a laminate according to the present disclosure is presumed as follows.

The ink used in the manufacturing method of a laminate according to the present disclosure contains a polymerizable monomer A having a (meth)acryloyl group, having a molecular weight of 215 or less, and having a solubility

parameter of 16.5 $MPa^{1/2}$ to 21.3 $MPa^{1/2}$. Since the polymerizable monomer A has a relatively low molecular weight and has a solubility parameter in the above-described range, the polymerizable monomer A has high affinity with the polymer including vinyl chloride as a constitutional unit, which is contained in the base material for image recording, and has excellent solubility in the base material for image recording. In addition, the ink used in the manufacturing method of a laminate according to the present disclosure contains an N-vinyl compound. Since the N-vinyl compound tends to have the same solubility parameter as the polymerizable monomer A, the N-vinyl compound has high affinity with the polymer including vinyl chloride as a constitutional unit, which is contained in the base material for image recording, and has excellent solubility in the base material for image recording. It is considered that polymerization proceeds in a state in which a part of the ink is dissolved in the base material for image recording, and thus the adhesiveness between the base material for image recording and the image is excellent. In addition, since the N-vinyl compound coexists with the polymerizable monomer having a (meth)acryloyl group, a polymerization reaction proceeds rapidly and curing properties are excellent. As a result, a strength as an image is increased, which contributes to the adhesiveness.

In addition, in the ink used in the manufacturing method of a laminate according to the present disclosure, a weighted average value of glass transition temperatures in a case where all polymerizable monomers contained in the ink are homopolymers is 0°C to 100°C. In this manner, an ink film (that is, an image) obtained by curing the ink has excellent thermal plasticity. Therefore, it is considered that the adhesiveness between the image and the base material for lamination is excellent.

JP2021-161182A does not disclose focusing on the interaction between the ink film formed by the ink or the curing of the ink and the base material containing the polymer including vinyl chloride as a constitutional unit.

Hereinafter, each step in the manufacturing method of a laminate according to the present disclosure will be described.

<<Image recording step>>

The image recording step is a step of applying an ink onto a base material for image recording, which contains a polymer including vinyl chloride as a constitutional unit, by an ink jet recording method to record an image.

<Base material for image recording>

The base material for image recording contains a polymer including vinyl chloride as a constitutional unit.

The polymer including vinyl chloride as a constitutional unit may be a homopolymer of vinyl chloride (that is, polyvinyl chloride), or may be a copolymer including vinyl chloride and a monomer other than the vinyl chloride as a constitutional unit.

Examples of the copolymer including vinyl chloride and a monomer other than the vinyl chloride as a constitutional unit include a vinyl chloride-urethane copolymer, a vinyl chloride-ethylene copolymer, a vinyl chloride-vinyl acetate copolymer, a vinyl chloride-vinyl acetate-maleic acid copolymer, a vinyl chloride-vinyl acetate-vinyl alcohol copolymer, and a vinyl chloride-ethylene-vinyl acetate copolymer.

Among these, the base material for image recording preferably contains polyvinyl chloride.

The base material for image recording may contain a component other than the polymer including vinyl chloride as a constitutional unit. Examples of other components include a plasticizer, a stabilizer, an antioxidant, an ultraviolet absorbing agent, a binder resin, and a white pigment.

The base material for image recording may include a layer containing the polymer including vinyl chloride as a constitutional unit and a surface-treated layer, but from the viewpoint of obtaining the adhesiveness between the base material for image recording and the image by dissolving the ink in the base material for image recording, it is preferable that the base material for image recording does not include the surface-treated layer. That is, the surface of the base material for image recording to be applied with the ink preferably contains the polymer including vinyl chloride as a constitutional unit.

A thickness of the base material for image recording is not particularly limited, but is, for example, preferably 0.1 μm to 1,000 μm, more preferably 0.1 μm to 800 μm, and still more preferably 1 μm to 500 μm.

<Ink>

The ink contains a polymerizable monomer A having a (meth)acryloyl group, having a molecular weight of 215 or less, and having a solubility parameter (hereinafter, also referred to as "SP value") of 16.5 $MPa^{1/2}$ to 21.3 $MPa^{1/2}$ , and contains an N-vinyl compound. Hereinafter, the polymerizable monomer having a (meth)acryloyl group, a molecular weight of 215 or less, and an SP value of 16.5 $MPa^{1/2}$ to 21.3 $MPa^{1/2}$ is also simply referred to as "polymerizable monomer A".

(Polymerizable monomer A)

The ink contains at least one polymerizable monomer A.

The molecular weight of the polymerizable monomer A is 215 or less, preferably 205 or less and more preferably 200 or less. The molecular weight of the polymerizable monomer A being 215 or less refers to that the molecular weight is relatively low, and the ink is easily dissolved in the base material for image recording by setting the molecular weight to 215 or less. As a result, the adhesiveness between the base material for image recording and the ink film is improved. In addition, in a case where the molecular weight of the polymerizable monomer A is 205 or less, a distance between crosslinking points is shortened and a density of the ink film is improved, so that a peel strength is increased.

The lower limit value of the molecular weight of the polymerizable monomer A is not particularly limited, but is, for example, 100. The molecular weight is calculated based on the kind and the number of atoms constituting the compound.

The SP value of the polymerizable monomer A is 16.5 $MPa^{1/2}$ to 21.3 $MPa^{1/2}$ preferably 18 $MPa^{1/2}$ to 19.5 $MPa^{1/2}$. Since the SP value of the polymerizable monomer A is 16.5 $MPa^{1/2}$ to 21.3 $MPa^{1/2}$, the ink has high affinity for the base material for image recording and has excellent solubility. Polymerization proceeds in a state in which a part of the ink is dissolved in the base material for image recording, and thus the adhesiveness between the base material for image recording and the image is excellent.

In the present disclosure, the SP value of the polymerizable monomer A means Hansen solubility parameters. The Hansen solubility parameters are obtained by dividing the solubility parameters introduced by Hildebrand into three components, a dispersion element δd, a polarity element δp, and a hydrogen bond element δh, and expressing the parameters in a three-dimensional space.

The SP value δ of the polymerizable monomer A is a value calculated by the following expression A.

$$\text{SP value } (\delta)\ [\text{MPa}^{1/2}] = (\delta d^2 + \delta p^2 + \delta h^2)^{1/2} \ \ldots \text{A}$$

The dispersion element δd, the polarity element δp, and the hydrogen bond element δh are calculated using HSPiP (version 4.1.07) software.

The polymerizable monomer A has a (meth)acryloyl group (preferably an acryloyl group), and more preferably has a (meth)acryloyloxy group (preferably an acryloyloxy group). The N-vinyl compound described later has high activity with respect to a polymerizable monomer having a (meth)acryloyl group, and the polymerization reaction proceeds rapidly. Since the polymerizable monomer A has a (meth)acryloyl group, the polymerization reaction proceeds rapidly in the ink in a case of coexisting with the N-vinyl compound described later, and thus curing properties are excellent.

The number of (meth)acryloyl groups included in the polymerizable monomer A may be only 1 or 2 or more, but is preferably only 1.

Examples of the polymerizable monomer A include the following compounds.

Tetrahydrofurfuryl acrylate (SP value: 18.8 $MPa^{1/2}$)
Cyclic trimethylolpropane formal acrylate (SP value: 19.0 $MPa^{1/2}$)
Ethoxydiethylene glycol acrylate (SP value: 18.2 $MPa^{1/2}$)
Cyclohexyl acrylate (SP value: 17.9 $MPa^{1/2}$)
Isobornyl acrylate (SP value: 17.1 $MPa^{1/2}$)
Phenoxyethyl acrylate (SP value: 19.44 $MPa^{1/2}$)
N,N-Dimethylacrylamide (SP value: 21.4 $MPa^{1/2}$)
4-tert-Butylcyclohexyl acrylate (SP value: 16.7 $MPa^{1/2}$)
3,3,5-Trimethylcyclohexyl acrylate (SP value: 16.7 $MPa^{1/2}$)
4-Hydroxydibutyl acrylate (SP value: 21.0 $MPa^{1/2}$)
2-Methyl-2-ethyl-1,3-dioxolan-4-yl)methyl acrylate (SP value: 18.2 $MPa^{1/2}$)
Benzyl acrylate (SP value: 19.0 $MPa^{1/2}$)
(3-Ethoxytetan-3-yl)methyl acrylate (SP value: 18.6 $MPa^{1/2}$)
2-Oxotetrahydrofuran-3-yl acrylate (SP value: 21.2 $MPa^{1/2}$)

Among these, from the viewpoint of improving the adhesiveness to the base material for image recording and the adhesiveness to the base material for lamination, the polymerizable monomer A preferably includes at least one selected from the group consisting of tetrahydrofurfuryl acrylate, cyclic trimethylolpropane formal acrylate, and ethoxydiethylene glycol acrylate; and more preferably includes at least one selected from the group consisting of cyclic trimethylolpropane formal acrylate and ethoxydiethylene glycol acrylate.

A content of the polymerizable monomer A is preferably 30% by mass to 75% by mass, more preferably 40% by mass to 70% by mass, and still more preferably 44% by mass to 63% by mass with respect to the total amount of the ink.

(N-vinyl compound)

The ink contains at least one N-vinyl compound.

The N-vinyl compound is a compound in which a vinyl group is bonded to a nitrogen atom.

As in the polymerizable monomer A, the N-vinyl compound is mostly a compound having an SP value corresponding to 16.5 $MPa^{1/2}$ to 21.3 $MPa^{1/2}$, and has high solubility in the base material for image recording, which contributes to the adhesiveness between the base material for image recording and the image.

Examples of the N-vinyl compound include N-vinylpyrrolidone, N-vinylcaprolactam, N-vinylcarbazole, N-vinylimidazole, N-vinylphthalimide, N-vinylacetamide, N-vinylformamide, and 5-methyl-3-vinyl-2-oxazolidinone.

Among these, from the viewpoint of high solubility in the base material for image recording and improvement of the adhesiveness between the base material for image recording and the image, the N-vinyl compound is preferably at least one selected from the group consisting of N-vinylcaprolactam and 5-methyl-3-vinyl-2-oxazolidinone.

A content of the N-vinyl compound is preferably 10% by mass to 50% by mass, more preferably 15% by mass to 40% by mass, and still more preferably 20% by mass to 30% by mass with respect to the total amount of the ink.

A mass ratio of the content of the N-vinyl compound with respect to the content of the polymerizable monomer A is preferably 0.35 or more, and more preferably 0.5 or more. In a case where the above-described mass ratio is 0.35 or more, the curing properties of the ink are improved, and the adhesiveness between the image and the base material for lamination is improved.

The N-vinyl compound tends to have a high glass transition temperature in a case of being a homopolymer. Therefore, the upper limit value of the above-described mass ratio is not particularly limited, but from the viewpoint of obtaining thermal plasticity in the ink film, the mass ratio of the content of the N-vinyl compound with respect to the content of the polymerizable monomer A is preferably 0.30 to 0.80, more preferably 0.35 to 0.75, and still more preferably 0.5 to 0.70.

In the ink used for the image recording, a weighted average value of glass transition temperatures in a case where all polymerizable monomers contained in the ink are homopolymers is 0°C to 100°C, preferably 5°C to 50°C and more preferably 10°C to 30°C. In a case where the above-described weighted average value is 0°C to 100°C, since the ink film (that is, the image) obtained by curing the ink has more excellent thermal plasticity, the adhesiveness between the image and the base material for lamination is excellent.

The glass transition temperature in a case where the polymerizable monomer is homopolymerized is measured by the following method. The "polymerizable monomer" herein refers to a compound having a polymerizable group and having a molecular weight of 1,000 or less.

First, a homopolymer having a weight-average molecular weight of 10,000 to 20,000 is produced using the polymerizable monomer. A glass transition temperature of the produced homopolymer is measured according to the method described in JIS K 7121:2012.

In the present disclosure, the glass transition temperature is measured using a differential scanning calorimeter, for example, using a product name "DSC-60" manufactured by Shimadzu Corporation.

In the present disclosure, the weight-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

The glass transition temperature of the homopolymer varies depending on the weight-average molecular weight of the homopolymer, but the variation is negligibly small in a case where the weight-average molecular weight is 10,000 to 20,000.

The weighted average value of the glass transition temperatures is calculated by the following expression. In the expression, $T_i$ represents a glass transition temperature in a case where an i-th polymerizable monomer contained in the ink is a homopolymer, and $C_i$ represents a content (% by mass) of the i-th polymerizable monomer with respect to the total amount of the ink.

$$\text{Weighted average value of glass transition temperatures} = \Sigma T_i C_i / \Sigma C_i$$

(Other polymerizable compounds)

The ink may contain a polymerizable compound other than the polymerizable monomer A and the N-vinyl compound, as other polymerizable compounds. However, as described above, the types and contents of the other polymerizable compounds are adjusted such that the weighted average value of the glass transition temperatures in a case where all polymerizable monomers contained in the ink are homopolymers is in the range of 0°C to 100°C.
A polymerizable group included in the other polymerizable compounds is preferably a radically polymerizable group, more preferably a photoradically polymerizable group, and still more preferably an ethylenically unsaturated group. Examples of the other polymerizable compounds include a (meth)acrylate compound, a (meth)acrylamide compound, a vinyl ether compounds, an allyl compound, and an unsaturated carboxylic acid.
A proportion of the polymerizable monomer having a molecular weight of 205 or less with respect to all polymerizable compounds contained in the ink is preferably 80% by mass or more, and more preferably 90% by mass or more. **In** a case where the above-described proportion is 80% by mass or more, the solubility of the ink in the base material for image recording is high, and the adhesiveness between the base material for image recording and the image is improved. The upper limit value of the above-described proportion is not particularly limited, and the above-described proportion may be 100% by mass. That is, all polymerizable compounds contained in the ink may be the polymerizable monomer having a molecular weight of 205 or less.
The "polymerizable compound" herein means a compound having at least one polymerizable group, and a molecular weight thereof is not particularly limited.
A proportion of the monofunctional polymerizable compound with respect to all polymerizable compounds contained in the ink is preferably 90% by mass or more, and more preferably 92% by mass or more. In a case where the above-described proportion is 90% by mass or more, cure shrinkage due to residual stress is suppressed, and the adhesiveness between the base material for image recording and the image is improved. The upper limit value of the above-described proportion is not particularly limited, and the above-described proportion may be 100% by mass. That is, all polymerizable compounds contained in the ink may be the monofunctional polymerizable compound.
The "polymerizable compound" herein means a compound having at least one polymerizable group, and a molecular weight thereof is not particularly limited. The "monofunctional polymerizable compound" means a compound having one polymerizable group.

(Polymerization initiator)

The ink preferably contains at least one polymerization initiator.
As the polymerization initiator, a photoradical polymerization initiator which absorbs light to generate a radical as a polymerization initiation species is preferable.
Examples of the polymerization initiator include an alkylphenone compound, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.
Among these, as the polymerization initiator, at least one compound selected from the group consisting of an acylphosphine compound and a thio compound is preferable, and at least one compound selected from the group consisting of an acylphosphine oxide compound and a thioxanthone compound is more preferable. It is still more preferable to use an acylphosphine oxide compound and a thioxanthone compound in combination.
Examples of the acylphosphine oxide compound include a monoacylphosphine oxide compound and a bisacylphosphine oxide compound. The acylphosphine oxide compound is preferably a bisacylphosphine oxide compound.
Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.
Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide compound, it is preferable to include at least one selected from the group consisting of bis(2,4,6-trimethylbenzoyl)phenylphosphine oxide (product name "Omnirad 819", manufactured by IGM Resins B.V.) and 2,4,6-trimethylbenzoyldiphenylphosphine oxide (product name "Omnirad TPO-H", manufactured by IGM Resins B.V.).

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl) thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminthioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxylimide, n-octylthioxanthone-3,4-dicarboxylimide, N-(1,1,3,3-tetramethylbutyl)thioxanthone-3,4-dicarboxylimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yl)oxy-N,N,N-trimethyl-1-propanamini um chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

In a case where the ink contains a polymerization initiator, from the viewpoint of improving the curing properties of the ink, a content of the polymerization initiator is preferably 2% by mass or more and more preferably 5% by mass or more with respect to the total amount of the ink. The upper limit of the content of the polymerization initiator is not particularly limited, but for example, it is 10% by mass.

(Surfactant)

The ink may contain at least one surfactant. In the present disclosure, the surfactant means a compound having a surfactant function and a molecular weight of less than 1,000. The molecular weight can be calculated from the type and the number of atoms constituting the compound.

However, from the viewpoint of improving the affinity between the base material for image recording and the ink, it is preferable that the ink does not contain a surfactant, or a content of the surfactant with respect to the total amount of the ink is less than 0.1% by mass. In a case where the ink contains a surfactant, as the surfactant, a generally known surfactant can be used.

(Polymerization inhibitor)

The ink according to the present disclosure preferably contains at least one polymerization inhibitor.

Examples of the polymerization inhibitor include p-methoxyphenol, quinones (for example, hydroquinone, benzoquinone, and methoxybenzoquinone), phenothiazine, catechols, alkylphenols (for example, dibutyl hydroxy toluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), and tris(N-nitroso-N-phenylhydroxylamine)aluminum salt (also known as Cupferron Al).

Among these, as the polymerization inhibitor, it is preferable to include at least one selected from the group consisting of p-methoxyphenol, catechols, quinones, alkylphenols, TEMPO, TEMPOL, and tris(N-nitroso-N-phenylhydroxylamine)aluminum salt; and it is more preferable to include at least one selected from the group consisting of p-methoxyphenol, hydroquinone, benzoquinone, BHT, TEMPO, TEMPOL, and tris(N-nitroso-N-phenylhydroxylamine) aluminum salt.

In a case where the ink contains a polymerization inhibitor, a content of the polymerization inhibitor is preferably

0.01% by mass to 2.0% by mass, more preferably 0.02% by mass to 1.0% by mass, and still more preferably 0.03% by mass to 0.5% by mass with respect to the total amount of the ink.

(Resin)

The ink preferably contains at least one resin. In the present disclosure, the "resin" does not have a polymerizable group. In the present disclosure, the resin having a polymerizable group corresponds to the "polymerizable compound" and is distinguished from the resin. In addition, the resin means a compound having a weight-average molecular weight of 1,000 or more.

Examples of the resin include an epoxy resin, a vinyl chloride-based resin, a polyester resin, a (meth)acrylic resin, a urethane resin, chlorinated polyolefin, and polyketone.

The vinyl chloride-based resin means a polymer including vinyl chloride as a constitutional unit. The vinyl chloride-based resin may be a homopolymer of vinyl chloride (that is, polyvinyl chloride), or may be a copolymer including vinyl chloride and a monomer other than the vinyl chloride as a constitutional unit.

Examples of a commercially available product of the vinyl chloride-based resin include UCAR Solution Vinyl Resin VYHD, VYHH, VMCA, VROH, and VYLF-X manufactured by Dow Chemical Company; SOLBIN resin CL, CNL, C5R, and TA5R manufactured by Nissin Chemical Co., Ltd.; and VINNOL (registered trademark) E15/40, E15/45, H14/36, H15/42, H15/50, H11/59, H40/43, H40/50, H40/55, H40/60, H15/45M, E15/45M, and E15/40A manufactured by Wacker Chemie AG

Examples of a commercially available product of the polyester resin include Elitel series manufactured by UNITIKA Ltd.; VYLON series manufactured by TOYOBO Co., Ltd.; Espel series manufactured by Hitachi Chemical Co., Ltd.; and TEGO (registered trademark) addbond series manufactured by Evonik Industries AG

Examples of the (meth)acrylic resin include a copolymer of methyl methacrylate and n-butyl methacrylate.

Examples of a commercially available product of the (meth)acrylic resin include Elvacite 2013 (a copolymer of methyl methacrylate and n-butyl methacrylate, Mw = 34,000), Elvacite 2014 (a copolymer of methyl methacrylate and n-butyl methacrylate, Mw = 119,000), and Elvacite 4099 (a copolymer of methyl methacrylate and n-butyl methacrylate, Mw = 15,000) manufactured by Lucite International Alpha B.V; and DIANAL (registered trademark) BR-113 (butyl methacrylate resin, Mw = 30,000) manufactured by Mitsubishi Chemical Corporation.

The urethane resin means a polymer having a urethane bond in the main chain. The urethane resin is produced, for example, by reacting a polyisocyanate compound with a polyol compound.

Examples of a commercially available product of the chlorinated polyolefin include SUPERCHLON (registered trademark) 814HS manufactured by Nippon Paper Industries Co., Ltd.

Examples of a commercially available product of the polyketone include TEGO (registered trademark) VARIPLUS AP, CA, and SK manufactured by Evonik Industries AG

Among these, the ink preferably contains at least one selected from the group consisting of a vinyl chloride-vinyl acetate copolymer and a polyester resin. The vinyl chloride-vinyl acetate copolymer and the polyester resin have excellent affinity for the base material for image recording, and in a case where the ink contains these resins, the solubility of the ink in the base material for image recording is increased, and the adhesiveness between the base material for image recording and the image is improved.

In addition, the ink preferably contains a resin T including at least one group selected from the group consisting of a fluorinated hydrocarbon group, a polysiloxane group, and a hydrocarbon group having 12 or more carbon atoms. In a case where the resin includes at least one group selected from the group consisting of a fluorinated hydrocarbon group, a polysiloxane group, and a hydrocarbon group having 12 or more carbon atoms, the solubility of the ink in the base material for image recording is increased, and the adhesiveness between the base material for image recording and the image is improved.

The ink may contain at least one selected from the group consisting of a vinyl chloride-vinyl acetate copolymer and a polyester resin, and may include the resin T including at least one group selected from the group consisting of a fluorinated hydrocarbon group, a polysiloxane group, and a hydrocarbon group having 12 or more carbon atoms.

The fluorinated hydrocarbon group means a hydrocarbon group substituted with at least one fluorine atom.

Examples of the fluorinated hydrocarbon group include a fluorinated alkyl group, a fluorinated alkenyl group, and a fluorinated aryl group.

As the fluorinated hydrocarbon group, a fluorinated alkyl group is preferable, and a perfluoroalkyl group is particularly preferable.

The number of fluorine atoms in the fluorinated hydrocarbon group is preferably 6 or more and more preferably 8 or more.

The upper limit of the number of fluorine atoms in the fluorinated hydrocarbon group is not particularly limited, and examples thereof include 40.

The number of carbon atoms in the fluorinated hydrocarbon group is preferably 3 or more and more preferably 4

or more.

The upper limit of the number of carbon atoms in the fluorinated hydrocarbon group is not particularly limited, and examples thereof include 20.

Examples of the hydrocarbon group having 12 or more carbon atoms include an alkyl group, an alkenyl group, an aryl group, an alkylaryl group, and an aralkyl group. As the hydrocarbon group having 12 or more carbon atoms, an alkyl group is particularly preferable.

The number of carbon atoms in the hydrocarbon group having 12 or more carbon atoms is preferably 14 or more and more preferably 16 or more.

The upper limit of the number of carbon atoms in the hydrocarbon group having 12 or more carbon atoms is not particularly limited, and examples thereof include 30.

The polysiloxane group means a divalent group including a repetition of an Si-O bond.

The specific resin more preferably includes a monovalent group including a polysiloxane group.

Examples of the monovalent group including a polysiloxane group include the following group (P).

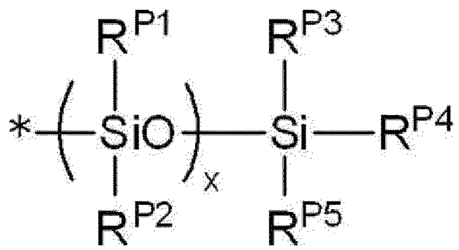

(P)

In the group (P), $R^{P1}$ and $R^{P2}$ each independently represent a hydrocarbon group having 1 to 6 carbon atoms or the following group (Z), $R^{P3}$ to $R^{P5}$ each independently represent a hydrocarbon group having 1 to 6 carbon atoms, x represents an integer of 1 to 100, and * represents a bonding position.

In a case where x is an integer of 2 or more, a plurality of $R^{P1}$'s may be the same or different from each other, and a plurality of $R^{P2}$'s may be the same or different from each other.

In the group (P), the number of Si-O bonds (that is, siloxane bonds) is 2 or more.

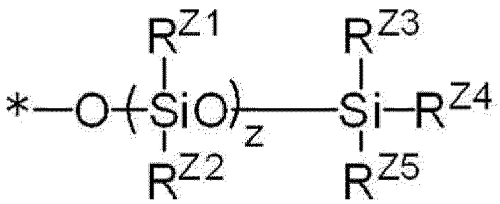

(Z)

In the group (Z), $R^{Z1}$ to $R^{Z5}$ each independently represent a hydrocarbon group having 1 to 6 carbon atoms, z represents an integer of 0 to 100, and * represents a bonding position.

In a case where z is an integer of 2 or more, a plurality of $R^{Z1}$'s may be the same or different from each other, and a plurality of $R^{Z2}$'s may be the same or different from each other.

x in the group (P) is preferably an integer of 1 to 50, more preferably an integer of 1 to 20, and particularly preferably an integer of 1 to 10.

In the group (P), as the hydrocarbon groups having 1 to 6 carbon atoms in $R^{P1}$ to $R^{P5}$ a methyl group, an ethyl group, or a phenyl group is preferable, a methyl group or a phenyl group is more preferable, and a methyl group is particularly preferable.

z in the group (Z) is preferably an integer of 0 to 50, more preferably an integer of 0 to 20, and particularly preferably an integer of 0 to 10.

In the group (Z), as the hydrocarbon groups having 1 to 6 carbon atoms in $R^{Z1}$ to $R^{Z5}$, a methyl group, an ethyl group, or a phenyl group is preferable, a methyl group or a phenyl group is more preferable, and a methyl group is particularly preferable.

-Constitutional unit (1) including at least one selected from group consisting of fluorinated hydrocarbon group, polysiloxane group, and hydrocarbon group having 12 or more carbon atoms-

It is preferable that the resin T includes at least one constitutional unit (1) including at least one selected from the group consisting of a fluorinated hydrocarbon group, a polysiloxane group, and a hydrocarbon group having 12 or more carbon atoms.

Examples of the constitutional unit (1) include a constitutional unit derived from a vinyl monomer (for example,

(meth)acrylic acid ester, (meth)acrylamide, or the like), a constitutional unit derived from a diol compound, and a constitutional unit derived from a diisocyanate compound.

As the constitutional unit (1), a constitutional unit derived from a (meth)acrylic acid ester is preferable, and the following constitutional unit (1A) is more preferable.

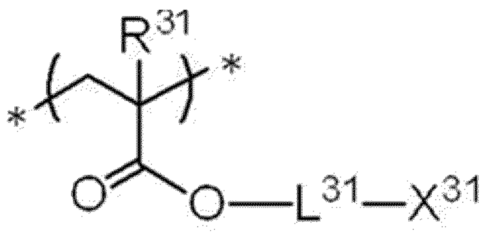

(1A)

In the constitutional unit (1A), $R^{31}$ represents a hydrogen atom or a methyl group, $L^{31}$ represents a single bond or a linking group, $X^{31}$ represents a fluorinated hydrocarbon group, a monovalent group including a polysiloxane group, or a hydrocarbon group having 12 or more carbon atoms, and two * represent a bonding position.

The preferred aspects of the fluorinated hydrocarbon group, the monovalent group including a polysiloxane group, and the hydrocarbon group having 12 or more carbon atoms in $X^{31}$ are as described above, respectively.

$R^{31}$ represents a hydrogen atom or a methyl group, and a methyl group is preferable.

As the linking group represented by $L^{31}$, a divalent hydrocarbon group having 1 to 11 carbon atoms (more preferably having 2 to 11 carbon atoms and still more preferably having 2 to 8 carbon atoms) is preferable.

The above-described divalent hydrocarbon group may have a substituent such as a hydroxy group and an alkoxy group.

Examples of the above-described divalent hydrocarbon group include an alkylene group, an alkenylene group, an arylene group, an alkylenearylene group, an alkylenearylenealkylene group, an alkylene carbonyloxyalkylene group, and an arylene carbonyloxyalkylene group.

As the above-described divalent hydrocarbon group, an alkylene group having 1 to 11 carbon atoms (more preferably having 1 to 6 carbon atoms) is particularly preferable.

Specific examples of the constitutional unit (1A) including at least one selected from the group consisting of a fluorinated hydrocarbon group, a polysiloxane group, and a hydrocarbon group having 12 or more carbon atoms are as follows.

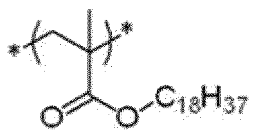
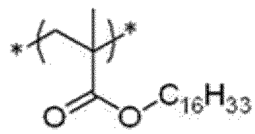
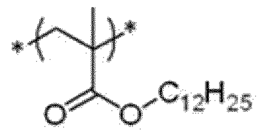

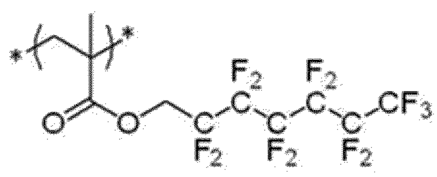
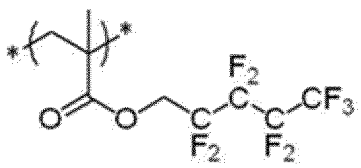
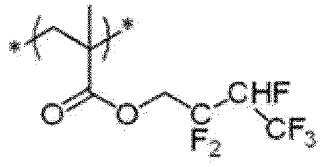

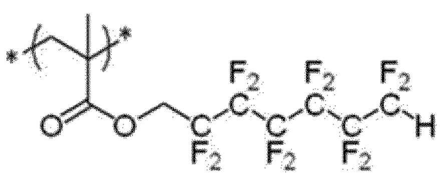
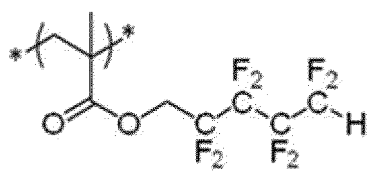

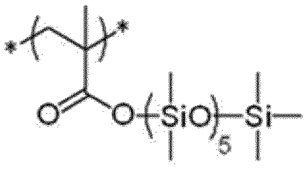
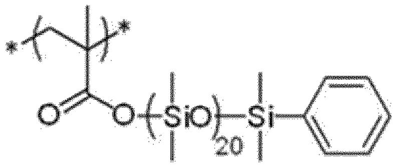

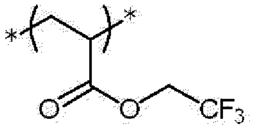
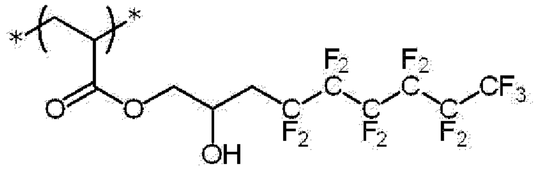
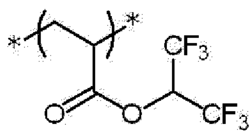

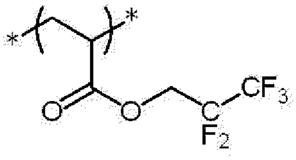
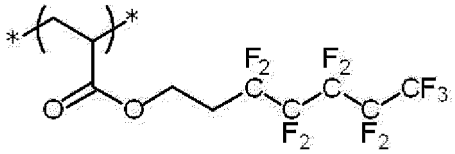

Specific examples of the constitutional unit (1) also include the following constitutional units.

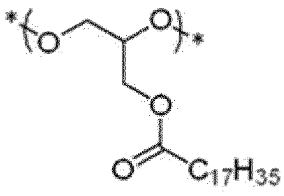

It is preferable that the resin T includes at least one constitutional unit (2) including at least one selected from the group consisting of an alkylthio group, an alkylene thioalkylene group, and a mercapto group, in addition to the above-described constitutional unit (1).

Examples of the constitutional unit (2) include an alkylthio group, an alkylene thioalkylene group, an oxyalkylene thioalkyleneoxy group (preferably having 2 to 20 carbon atoms and more preferably having 2 to 10 carbon atoms), a mercapto group, a mercaptoalkyl group (preferably having 1 to 10 carbon atoms), and a mercaptoalkylamino group (preferably having 1 to 10 carbon atoms).

From the viewpoint of further suppressing yellowing of the image, the number of carbon atoms in the alkylthio group is preferably 1 to 30, more preferably 1 to 20, still more preferably 6 to 20, and particularly preferably 10 to 20.

From the viewpoint of further suppressing the yellowing of the image, the number of carbon atoms in the alkylene thioalkylene group is preferably 2 to 20 and more preferably 2 to 10.

In addition, examples of the constitutional unit (2) also include a constitutional unit derived from a vinyl monomer including at least one selected from the group consisting of an alkylthio group, an alkylene thioalkylene group, and a mercapto group (for example, (meth)acrylic acid ester, (meth)acrylamide, and the like).

From the viewpoint of further suppressing the yellowing of the image, the constitutional unit (2) including at least one selected from the group consisting of an alkylthio group, an alkylene thioalkylene group, and a mercapto group is preferably an alkylthio group, and particularly preferably an alkylthio group as a terminal group of the main chain of the resin T.

Specific examples of the constitutional unit (2) are as follows.

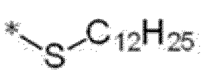
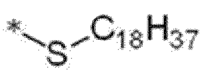
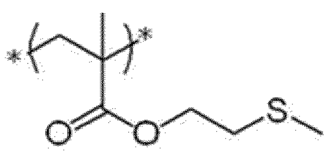

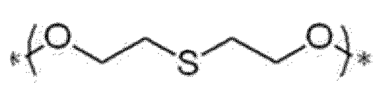

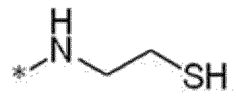

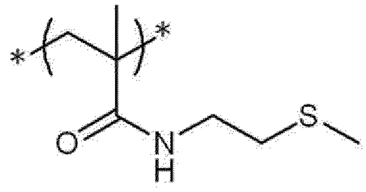

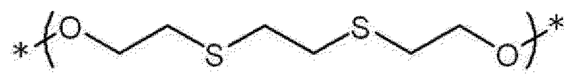

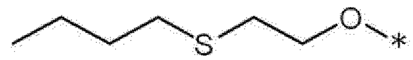

The resin T preferably includes at least one constitutional unit (3) including an amine structure having an $\alpha$-hydrogen atom, in addition to the above-described constitutional unit (1).

Examples of the constitutional unit (3) include a constitutional unit derived from a vinyl monomer (for example, (meth)acrylic acid ester, (meth)acrylamide, or the like), a constitutional unit derived from a diol compound, a constitutional unit derived from a diamine compound, and a constitutional unit derived from a diisocyanate compound.

Here, the (meth)acrylic acid ester is a raw material for a (meth)acrylic resin, the diisocyanate compound is a raw material for a urethane resin or a urea resin, the diol compound is a raw material for a urethane resin, and the diamine compound is a raw material for a urea resin.

The constitutional unit (3) is preferably a constitutional unit derived from a (meth)acrylic acid ester, and more preferably the following constitutional unit (3A).

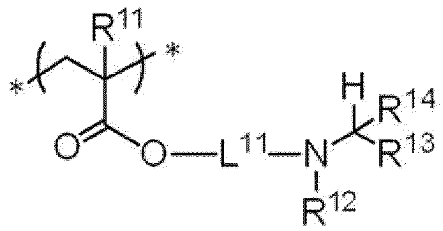

(3A)

In the constitutional unit (3A), $R^{11}$ represents a hydrogen atom or a methyl group, $R^{12}$, $R^{13}$, and $R^{14}$ each independently represent a hydrogen atom or a hydrocarbon group, $L^{11}$ represents a linking group, and two * represent a bonding position. $R^{12}$ and $L^{11}$ may be linked to each other to form a ring, and $R^{12}$ and $R^{13}$ may be linked to each other to form a ring.

In the constitutional unit (3A), $R^{11}$ represents a hydrogen atom or a methyl group, and is preferably a methyl group.

In the constitutional unit (3A), the number of carbon atoms in the above-described hydrocarbon group of $R^{12}$, $R^{13}$, and $R^{14}$ is preferably 1 to 11, more preferably 1 to 6, and particularly preferably 1 to 3.

Examples of the above-described hydrocarbon group of $R^{12}$, $R^{13}$, and $R^{14}$ include an alkyl group, an alkenyl group, an aryl group, an alkylaryl group, and an aralkyl group; and an alkyl group or an aryl group is preferable and an alkyl group is more preferable.

The above-described hydrocarbon groups of $R^{12}$, $R^{13}$, and $R^{14}$ may be substituted. Examples of the substituent in this case include a hydroxy group and an alkoxy group.

From the viewpoint of further suppressing stickiness of the image, $R^{13}$ and $R^{14}$ are each independently preferably a hydrogen atom or an alkyl group having 1 to 6 carbon atoms, more preferably a hydrogen atom or an alkyl group having 1 to 3 carbon atoms, and still more preferably a hydrogen atom or a methyl group.

From the viewpoint of further suppressing the stickiness of the image, it is particularly preferable that $R^{13}$ and $R^{14}$ are both hydrogen atoms. The hydrogen atoms as $R^{13}$ and $R^{14}$ are all $\alpha$-hydrogen atoms. Therefore, in a case where both $R^{13}$ and $R^{14}$ are hydrogen atoms, the number of $\alpha$-hydrogen atoms in the amine structure is large, so that the function of the amine structure (that is, the function of inhibiting radical polymerization by oxygen) is more effectively exhibited. Therefore, in this case, the stickiness of the image is significantly suppressed.

From the viewpoint of further suppressing the stickiness of the image, $R^{12}$ is preferably a hydrocarbon group,

more preferably an alkyl group having 1 to 6 carbon atoms, still more preferably an alkyl group having 1 to 3 carbon atoms, even more preferably a methyl group or an ethyl group, and particularly preferably a methyl group.

In a case where $R^{12}$ is a hydrocarbon group (as a more preferred aspect, the group as described above), the stickiness of the image is suppressed as compared with a case where $R^{12}$ is a hydrogen atom. The reason for this is considered to be that, in the case where $R^{12}$ is a hydrocarbon group (as a more preferred aspect, the group as described above), formation of an N-O radical is suppressed, and as a result, the function of the amine structure (that is, the function of inhibiting radical polymerization by oxygen) is more effectively exhibited.

In the constitutional unit (3A), $L^{11}$ represents a linking group.

As the linking group represented by $L^{11}$, a divalent hydrocarbon group having 1 to 11 carbon atoms (more preferably having 2 to 11 carbon atoms and still more preferably having 2 to 8 carbon atoms) is preferable.

The above-described divalent hydrocarbon group may have a substituent such as a hydroxy group and an alkoxy group.

Examples of the above-described divalent hydrocarbon group include an alkylene group, an alkenylene group, an arylene group, an alkylenearylene group, an alkylenearylenealkylene group, an alkylene carbonyloxyalkylene group, and an arylene carbonyloxyalkylene group.

As the above-described divalent hydrocarbon group, an alkylene group having 1 to 11 carbon atoms (more preferably having 1 to 6 carbon atoms) is particularly preferable.

Specific examples of the constitutional unit (3) are as follows.

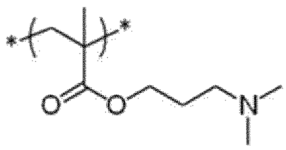
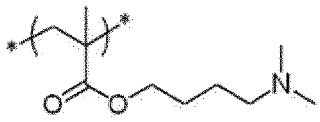
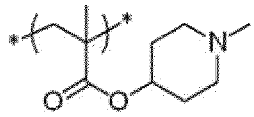

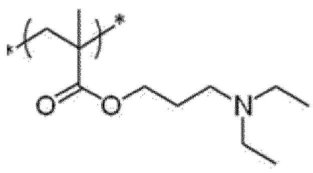
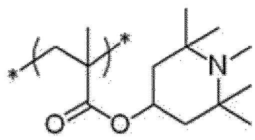
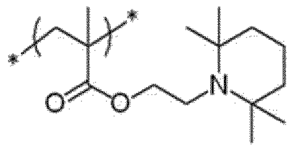

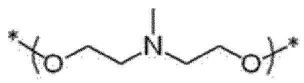

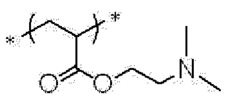
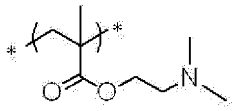
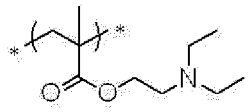
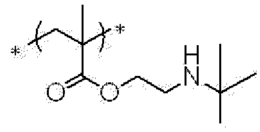

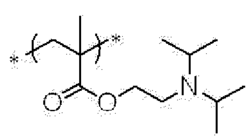
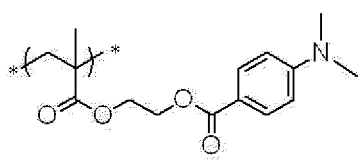
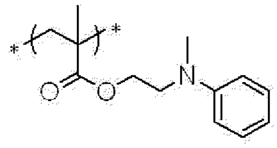
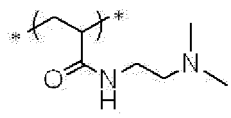

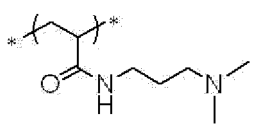
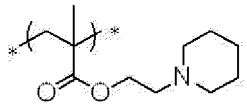
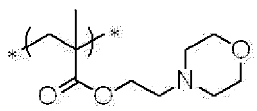
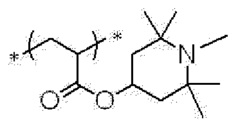

In particular, the resin T preferably includes a constitutional unit derived from a polymerizable monomer having an SP value of 16.5 $MPa^{1/2}$ to 24.0 $MPa^{1/2}$. In a case where the resin T includes a constitutional unit derived from a polymerizable monomer having an SP value of 16.5 $MPa^{1/2}$ to 24.0 $MPa^{1/2}$, at least one group selected from the group consisting of a fluorinated hydrocarbon group, a polysiloxane group, and a hydrocarbon group having 12 or more carbon

atoms is aligned on a surface of the ink film, and the affinity with the laminating base material is improved.

The SP value of the polymerizable monomer contained in the resin T is measured by the same method as the SP value of the polymerizable monomer A described above.

A weight-average molecular weight (Mw) of the resin is preferably 1,000 to 70,000 and more preferably 5,000 to 50,000.

In a case where the ink contains the resin, a content of the resin is preferably 1% by mass to 10% by mass, more preferably 1.5% by mass to 8% by mass, and still more preferably 2% by mass to 6% by mass with respect to the total amount of the ink.

(Water)

The ink may contain a small amount of water.

Specifically, a content of water with respect to the total amount of the ink is preferably 3% by mass or less, more preferably 2% by mass or less, and still more preferably 1% by mass or less.

The ink is preferably a non-aqueous ink which substantially does not contain water.

(Colorant)

The ink preferably contains at least one colorant.

The colorant is not particularly limited, and can be optionally selected from known coloring materials such as a pigment, a water-soluble dye, and a dispersed dye. Among these, from the viewpoint of excellent weather fastness and rich color reproducibility, the colorant is preferably a pigment.

The type of the pigment is not particularly limited, and any of an organic pigment or an inorganic pigment may be used.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In a case where the ink contains a pigment as the colorant, the ink may contain a dispersant as necessary.

For the colorant such as a pigment and the pigment dispersant, known documents such as paragraphs 0152 to 0158 of JP2011-225848A and paragraphs 0132 to 0149 of JP2009-209352A can be appropriately referred to.

In a case where the ink contains a colorant, a content of the colorant is preferably 0.1% by mass to 20% by mass and more preferably 0.5% by mass to 10% by mass with respect to the total amount of the ink.

(Other components)

The ink may contain a component other than those described above.

Examples of the other components include an ultraviolet absorber, a co-sensitizer, an antioxidant, a fading inhibitor, and a conductive salt.

With regard to the other components, reference can be appropriately made to known documents, for example, JP2011-225848A, JP2009-209352A, and the like.

(Physical properties of ink)

From the viewpoint of jettability, a viscosity of the ink is preferably 5 mPa·s to 50 mPa·s, more preferably 10 mPa·s to 30 mPa·s, and still more preferably 10 mPa·s to 25 mPa·s.

The viscosity means a value measured at 25°C.

The viscosity is a value measured using a viscometer, and can be measured using, for example, VISCOMETER RE-85L (manufactured by TOKI SANGYO CO., LTD.).

From the viewpoint of jettability, a surface tension of the ink is preferably 60 mN/m or less, more preferably 20 mN/m to 50 mN/m, and still more preferably 25 mN/m to 45 mN/m.

The surface tension means a value measured at 25°C.

The surface tension is a value measured using a surface tensiometer, and can be measured using, for example, product name "Automatic Surface Tentiometer CBVP-Z (manufactured by Kyowa Interface Science Co., Ltd.)".

<Ink application method>

The ink is applied by an ink jet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the base material for image recording by the ink jet recording method can be performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The ink is preferably applied using an ink jet head having a resolution of 300 dpi or more (more preferably 600 dpi or more and still more preferably 800 dpi or more). Herein, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

<Drying step>

The image recording step preferably includes a step of drying the applied ink after the ink is applied onto the base material for image recording (hereinafter, also referred to as "drying step").

The ink may be dried by natural drying, but is preferably dried by heating.

A heating temperature in the heating drying is preferably 30°C to 90°C and more preferably 50°C to 80°C.

Examples of the method of the heating drying include a method using infrared (IR) drying, hot air drying, and heating and drying using a heating device (for example, a heater, a hot plate, a heating furnace, or the like).

The heating drying can be performed by heating the ink from at least one of an image-recorded surface side or an image non-recorded surface side of the base material for image recording.

<Active energy ray irradiating step>

The image recording step preferably includes a step of applying the ink onto the base material for image recording and then irradiating the applied ink with active energy ray (hereinafter, also referred to as "active energy ray irradiating step").

By irradiating the ink applied onto the base material for image recording with active energy ray, a polymerization reaction of the polymerizable compound contained in the ink proceeds. As a result, the image can be fixed, and a hardness or the like of the image can be improved.

Examples of the active energy ray include ultraviolet rays, visible rays, and electron beams. Among these, ultraviolet rays are preferable as the active energy ray.

A peak wavelength of the ultraviolet rays is preferably 200 nm to 405 nm, more preferably 220 nm to 390 nm, and still more preferably 220 nm to 380 nm.

The exposure amount of ultraviolet rays is preferably 20 $mJ/cm^2$ to 5 $J/cm^2$ and more preferably 100 $mJ/cm^2$ to 1,500 $mJ/cm^2$. As irradiation conditions and basic irradiation method, irradiation conditions and irradiation method described in JP1985-132767A (JP-S60-132767A) can be adopted. Specifically, the irradiation method is preferably a method of providing a light source on both sides of a head unit including an ink jet device and scanning the substrate by the

head unit and the light source by a so-called shuttle method, or a method of irradiating the substrate with another light source that is not involved in driving.

As a light source for the ultraviolet irradiation, a discharge lamp or a laser light source (such as a gas laser and a solid-state laser) is mainly used, and as the discharge lamp, for example, a mercury lamp, a metal halide lamp, and an ultraviolet fluorescent lamp are widely known. In addition, a semiconductor light source such as ultraviolet light emitting diode (UV-LED) and ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

<<Laminating step>>

The laminating step is a laminating step of disposing a base material for lamination, which contains a polymer including vinyl chloride as a constitutional unit, over the image recorded in the image recording step.

<Base material for lamination>

A preferred aspect of the base material for lamination is the same as the preferred aspect of the base material for image recording, and the description thereof will be omitted.

<Lamination method>

In the laminating step, the base material for lamination is disposed over the image. In this case, other layers such as an adhesive layer may be provided over the image, and the base material for lamination may be disposed through the other layers. However, in the manufacturing method of a laminate according to the present disclosure, the ink film (that is, the image) obtained by curing the ink has excellent thermal plasticity, and thus it is preferable that the other layers are not disposed. That is, it is preferable that the image and the base material for lamination are overlapped with each other so as to be in contact with each other and laminated. As a result, a laminate having a laminated structure of base material for image recording/image/base material for lamination is obtained.

In the laminating step, it is preferable that the image and the base material for lamination are subjected to thermocompression bonding at a temperature of 100°C or higher. Since the weighted average value of glass transition temperatures in a case where all the polymerizable monomers contained in the ink are homopolymers is 0°C to 100°C, the image and the base material for lamination are thermocompression-bonded to each other by performing thermocompression bonding at a temperature of 100°C or higher, and the adhesiveness between the image and the base material for lamination is improved.

From the viewpoint of suppressing thermal decomposition, the upper limit value of the temperature in a case of performing the thermocompression bonding is preferably 200°C, more preferably 160°C, and still more preferably 140°C.

The temperature during the thermocompression bonding means a surface temperature of the base material for lamination.

A pressure during the thermocompression bonding is preferably 0.1 MPa to 20 MPa and more preferably 0.5 MPa to 15 MPa.

A time for the thermocompression bonding is, for example, 10 seconds to 500 seconds.

The thermocompression bonding may be performed in two stages. For example, a pressure at the first stage may be set to 0.5 MPa to 5 MPa, and a pressure at the second stage may be set to 6 MPa to 15 MPa, which is higher than the pressure at the first stage.

The laminate obtained by the manufacturing method of a laminate according to the present disclosure can be used, for example, as a floor material or a wall material of a transportation device (railway, bus, or the like), or a floor material or a wall material of a building.

[Inkjet ink]

The ink jet ink (hereinafter, also simply referred to as "ink") according to the present contains a polymerizable monomer A which has a (meth)acryloyl group, has a molecular weight of 215 or less, and has a solubility parameter of 16.5 $MPa^{1/2}$ to 21.3 $MPa^{1/2}$, and an N-vinyl compound, in which a weighted average value of glass transition temperatures in a case where all polymerizable monomers contained in the ink are homopolymers is 0°C to 100°C, and a mass ratio of a content of the N-vinyl compound to a content of the polymerizable monomer A is 0.35 or more.

The ink jet ink refers to an ink used in a case where an image is recorded by an ink jet recording method.

A preferred aspect of the ink according to the present disclosure is the same as the preferred aspect of the ink

used in the manufacturing method of a laminate described above, and the description thereof will be omitted.

The ink according to the present disclosure has excellent solubility in a base material containing a polymer including vinyl chloride as a constitutional unit. Therefore, the ink according to the present disclosure is preferably used for being applied to the base material containing a polymer including vinyl chloride as a constitutional unit. By using for the base material containing the polymer including vinyl chloride as a constitutional unit, it is possible to record an image having excellent adhesiveness with the base material.

The ink according to the present disclosure has excellent thermal plasticity in an ink film (that is, an image) formed by curing. Therefore, it is preferable that the base material for lamination is used for manufacturing a laminate by disposing the base material for lamination on an image. In particular, it is preferable to use, as the base material for lamination, the base material containing a polymer including vinyl chloride as a constitutional unit.

[Image recording method]

It is preferable that the image recording method according to the present disclosure includes a step of applying an ink onto a base material for image recording, which contains a polymer including vinyl chloride as a constitutional unit, by an ink jet recording method to record an image.

In the image recording method according to the present disclosure, a preferred aspect of the step of recording the image is the same as the preferred aspect of the image recording step in the manufacturing method of a laminate described above, and the description thereof will be omitted.

Examples

Hereinafter, the present disclosure will be described in more detail using Examples. However, the present disclosure is not limited to the following examples as long as it does not exceed the gist of the present invention.

[Examples 1 to 13 and Comparative Examples 1 to 5]

<Preparation of cyan pigment dispersion liquid>

The following components were mixed together and stirred at 2,500 rpm for 10 minutes using a mixer (L4R manufactured by Silverson Machines, Inc.) to obtain a mixture. Thereafter, the obtained mixture was put into a beads mill disperser DISPERMAT LS (manufactured by VMA-GETZMANN GMBH), and using a YTZ ball (manufactured by Nikkato Corporation) having a diameter of 0.65 mm, the mixture was dispersed at 2,500 rpm for 6 hours to obtain a cyan pigment dispersion liquid.

- Cyan pigment: product name "IRGALITE BLUE GLVO", manufactured by BASF SE ... 30% by mass
- BYK-168: product name "DISPERSE BYK-168", manufactured by BYK-Chemie GmbH ... 20% by mass
- DVE-3: triethylene glycol divinyl ether, manufactured by BASF SE ... 50% by mass

<Preparation of ink>

The above-described cyan pigment dispersion liquid and components other than the components contained in the cyan pigment dispersion liquid, which are described in Tables 1 and 2, were mixed so as to have the contents described in Tables 1 and 2, thereby preparing an ink.

Details of each component other than the cyan pigment, the dispersing agent, and DVE-3 in Tables 1 and 2 are as follows.

(Polymerizable monomer A)

- THFA: tetrahydrofurfuryl acrylate
- EOEOEA: ethoxydiethylene glycol acrylate
- CTFA: cyclic trimethylolpropane formal acrylate

(N-vinyl compound)

· NVC: N-vinylcaprolactam
· Vmox: 5-methyl-3-vinyl-2-oxazolidinone

(Other polymerizable compounds)

· LA: lauryl acrylate
· IOA: isooctyl acrylate
· EOTMPTA: trimethylolpropane ethylene oxide (EO)-modified triacrylate

(Polymerization initiator)

· ITX: 2-isopropylthioxanthone
Omni. 819: bis(2,4,6-trimethylbenzoyl)phenylphosphine oxide (product name "Omnirad 819", manufactured by IGM Resins B.V.)
· Omni. TPO-H: 2,4,6-trimethylbenzoyldiphenylphosphine oxide (product name "Omnirad TPO-H", manufactured by IGM Resins B.V)

(Polymerization inhibitor)

· TEMPOL: 4-hydroxy-2,2,6,6-tetramethylpiperidine-1-oxyl

(Surfactant)

· Tegorad 2010: product name "Tegorad 2010", manufactured by Evonik Industries AG; molecular weight: 800

(Resin)

· Polyester resin A: product name "Elitel UE3380", manufactured by UNITIKA LTD.
· Polyester resin B: product name "Elitel UE3320", manufactured by UNITIKALTD.
Vinyl chloride-vinyl acetate copolymer: product name "VINNOL H40/43", manufactured by Wacker Chemie AG

<Production of laminate>

-Image recording step-

As a base material for image recording, a polyvinyl chloride base material (product name "PVC35phr", manufactured by OKAMOTO INDUSTRIES, INC.) was prepared.

A rubber heater (SR100 manufactured by Three High Co., Ltd.) and an ultraviolet (UV) irradiation device (Vzero manufactured by Integration Technology Ltd.) were attached to an ink jet printer (KEGON) manufactured by Affinity Co., Ltd. to prepare an ink jet printer modification machine. An output of the rubber heater was set such that the base material for image recording, on which the ink had been applied, could be heated to approximately 60°C. A drying time of the ink in a case of performing the UV irradiation (that is, a time from landing of the ink jetted from the ink jet head on the base material for image recording to the UV irradiation) was adjusted to 10 seconds. The adjustment of the drying time of the ink in this case was performed by adjusting a transportation speed (5 m/min to 25 m/min) and the timing of opening and closing an UV shutter.

The above-described ink was jetted from the ink jet head of the ink jet printer modification machine to record a solid image on the base material for image recording, thereby obtaining an image recorded material. A resolution was set to 1200 dots per inch (dpi) $\times$ 600 dpi.

-Laminating step 1-

As a base material for lamination, a polyvinyl chloride base material (product name "SG800", manufactured by K&H Trading Co., Ltd., thickness: 75 μm) was used.
The base material for lamination was disposed over the image recorded on the base material for image recording. The image and the base material for lamination were thermocompression-bonded using a desktop automatic transfer press machine (product name "AF-54TEN", Asahi Seisakusho Ltd.). As a result, a laminate having a laminated structure of base material for image recording/image/base material for lamination was obtained.
A temperature in the thermocompression bonding was set to 130°C. The thermocompression bonding was carried out at a pressure of 2 MPa for 300 seconds, and then at a pressure of 10 MPa for 60 seconds.
A peel strength was measured using an evaluation sample of the laminate, obtained in the laminating step 1. The evaluation methods were as follows.

[Evaluation]

The evaluation sample was produced by the following method.
An image recording sample of 3.2 cm × 3.2 cm was cut out from the image recorded material obtained in the image recording step. In addition, a base material sample for lamination, having a size of 3.2 cm × 3.2 cm, was cut out from the base material for lamination.
A polyethylene terephthalate (PET) sheet having a thickness of 12 μm was disposed over the image-recorded surface of the image recording sample in a region of 1.0 cm × 3.2 cm including one side of the image recording sample. Next, a base material sample for lamination, having a size of 3.2 cm × 3.2 cm, was superimposed on the entire image-recorded surface of the image recording sample, the region (region of 1.0 cm × 3.2 cm) where the PET sheet had been disposed, and the region (region of 2.2 cm × 3.2 cm) where the PET sheet was not disposed.
In this state, the image recording sample and the base material sample for lamination were laminated under the same conditions as in the above-described laminating step. An evaluation sample was obtained by removing the PET sheet from the obtained laminate.
In the evaluation sample, the region where the PET sheet was not disposed before the laminating step was adhered to the image recording sample and the base material sample for lamination. On the other hand, in the evaluation sample, the region where the PET sheet had been disposed before the laminating step was not adhered to the image recording sample and the base material sample for lamination.
Next, in the region where the image-recording sample and the base material sample for lamination were not adhered, a peeling strength was measured by performing a tensile test of pulling the image recording sample and the base material sample for lamination in opposite directions. The tensile test was carried out using a tensile tester (product name "Autograph AGS-X 5KN", manufactured by Shimadzu Corporation). Two evaluation samples were produced, and a tensile test was performed twice. An average value of the two peel strengths was adopted. The evaluation standard was as follows.

5: peel strength was 7 N/cm or more.

4: peel strength was 3 N/cm or more and less than 7 N/cm.

3: peel strength was 2 N/cm or more and less than 3 N/cm.

2: peel strength was 1 N/cm or more and less than 2 N/cm.

1: peel strength was 0.1 N/cm or more and less than 1 N/cm.

0: peel strength was less than 0.1 N/cm.

The evaluation results are shown in Tables 1 and 2.
In Tables 1 and 2, SP values, molecular weights, and glass transition temperatures (Tg) of the polymerizable monomer A, the N-vinyl compound, and the other polymerizable compounds are indicated.
In Tables 1 and 2, "Weighted average value of Tg" indicates a weighted average value of glass transition temperatures in a case where all polymerizable monomers contained in the ink were homopolymers. The "N-vinyl compound/polymerizable monomer A" indicates a mass ratio of the content of the N-vinyl compound to the content of the polymerizable monomer A. The "Proportion of polymerizable monomer having molecular weight of 205 or less" indicates a proportion of the polymerizable monomer having a molecular weight of 205 or less with respect to all polymerizable

compounds contained in the ink. The "Proportion of monofunctional polymerizable compound" indicates a proportion of the monofunctional polymerizable compound with respect to all polymerizable compounds contained in the ink.

[Table 1]

| | | SP value | Molecular weight | Tg (°C) | Example 1 | Example 2 | Example 3 | Example 4 | Example 5 | Example 6 | Example 7 | Example 8 |
|---|---|---|---|---|---|---|---|---|---|---|---|---|
| Polymerizable monomer A | THFA | 18.8 | 156 | -15 | 50.8 | 40 | - | - | - | - | - | - |
| | EOEOEA | 18.2 | 188 | -54 | - | 5.35 | 25.35 | 25.35 | 28.85 | 31.35 | 25.35 | 26.85 |
| | CTFA | 19.0 | 200 | 32 | - | 545 | 25.45 | 25.45 | 28.95 | 31.45 | 25.35 | 26.95 |
| N-vinyl compound | NVC | 19.2 | 139 | 90 | 30 | 30 | 30 | - | 23 | 20 | 30 | 30 |
| | Vmox | 20.6 | 127 | 140 | - | - | - | 30 | - | - | - | - |
| Other polymerizable compounds | DVE-3 | 17.2 | 202 | 10 | 4.15 | 4.15 | 4.15 | 4.15 | 4.15 | 4.15 | 4.15 | 4.15 |
| Colorant | Cyan pigment | - | | | 2.49 | 2.49 | 2.49 | 2.49 | 2.49 | 2.49 | 2.49 | 2.49 |
| Dispersant | BYK-168 | - | | | 1.66 | 1.66 | 1.66 | 1.66 | 1.66 | 1.66 | 1.66 | 1.66 |
| Polymerization initiator | ITX | - | | | 2 | 2 | 2 | 2 | 2 | 2 | 2 | 2 |
| | Omni. 819 | - | | | 2.8 | 2.8 | 2.8 | 2.8 | 2.8 | 2.8 | 2.8 | 2.8 |
| | Omni. TPO-H | - | | | 2.8 | 2.8 | 2.8 | 2.8 | 2.8 | 2.8 | 2.8 | 2.8 |
| Polymerization inhibitor | TEMPOL | - | | | 0.3 | 0.3 | 0.3 | 0.3 | 0.3 | 0.3 | 0.3 | 0.3 |
| Surfactant | Tegorad 2010 | - | | | - | - | - | - | - | - | 0.1 | - |
| Resin | Polyester resin A | - | | | 3 | 3 | 3 | 3 | 3 | 3 | 3 | - |
| Weighted average value of Tg | | | | | 23.3 | 23.9 | 25.7 | 43.4 | 17.4 | 13.3 | 25.7 | 24.5 |
| N-vinyl compound/polymerizable monomer A | | | | | 0.59 | 0.59 | 0.59 | 0.59 | 0.40 | 0.32 | 0.59 | 0.56 |
| Proportion of polymerizable monomer having molecular weight of 205 or less | | | | | 100 | 100 | 100 | 100 | 100 | 100 | 100 | 100 |
| Proportion of monofunctional polymerizable compound | | | | | 95 | 95 | 95 | 95 | 95 | 95 | 95 | 95 |
| Evaluation | Peel strength | | | | 5 | 5 | 4 | 3 | 3 | 2 | 2 | 3 |

[Table 2]

| | | SP value | Molecular weight | Tg (°C) | Example 9 | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|---|---|---|---|
| Polymerizable monomer A | EOEOEA | 18.2 | 188 | -54 | 25.35 | 25.35 | 22.35 | 16.35 | 2 | - | - | 41.85 | 53.8 | - |
| | CTFA | 19.0 | 200 | 32 | 25.45 | 25.45 | 22.45 | 16.45 | 30.8 | - | - | 41.95 | - | 8.8 |
| N-vinyl compound | NVC | 19.2 | 139 | 90 | 30 | 30 | 30 | 30 | - | 30 | 30 | - | 30 | - |
| | Vmox | 20.6 | 127 | 140 | - | - | - | - | 48 | - | - | - | - | 75 |
| Other polymerizable compounds | LA | 16.7 | 240 | -30 | - | - | - | 18 | - | 53.8 | - | - | - | - |
| | IOA | 16.4 | 184 | -54 | - | - | - | - | - | - | 53.8 | - | - | - |
| | DVE-3 | 17.2 | 202 | 10 | 4.15 | 4.15 | 4.15 | 4.15 | 4.15 | 4.15 | 4.15 | 4.15 | 4.15 | 4.15 |
| | EOTMPTA | 17.7 | 428 | -40 | - | - | 6 | - | - | - | - | - | - | - |
| Colorant | Cyan pigment | - | | | 2.49 | 2.49 | 2.49 | 2.49 | 2.49 | 2.49 | 2.49 | 2.49 | 2.49 | 2.49 |
| Dispersant | BYK-168 | - | | | 1.66 | 1.66 | 1.66 | 1.66 | 1.66 | 1.66 | 1.66 | 1.66 | 1.66 | 1.66 |
| Polymerization initiator | ITX | - | | | 2 | 2 | 2 | 2 | 2 | 2 | 2 | 2 | 2 | 2 |
| | Omni. 819 | - | | | 2.8 | 2.8 | 2.8 | 2.8 | 2.8 | 2.8 | 2.8 | 2.8 | 2.8 | 2.8 |
| | Omni. TPO-H | - | | | 2.8 | 2.8 | 2.8 | 2.8 | 2.8 | 2.8 | 2.8 | 2.8 | 2.8 | 2.8 |
| Polymerization inhibitor | TEMPOL | - | | | 0.3 | 0.3 | 0.3 | 0.3 | 0.3 | 0.3 | 0.3 | 0.3 | 0.3 | 0.3 |
| Resin | Polyester resin A | - | | | - | - | 3 | 3 | 3 | - | - | - | - | - |
| | Polyester resin B | - | | | 3 | - | - | - | - | - | - | - | - | - |
| | Vinyl chloride-vinyl acetate resin | - | | | - | 3 | - | - | - | - | - | - | - | - |
| Weighted average value of Tg | | | | | 25.7 | 25.7 | 23.7 | 21.7 | 89.9 | 12.8 | -1.9 | -10.0 | -1.9 | 123.1 |
| N-vinyl compound/polymerizable monomer A | | | | | 0.59 | 0.59 | 0.67 | 0.91 | 1.46 | - | - | - | 0.56 | 8.52 |
| Proportion of polymerizable monomer having molecular weight of 205 or less | | | | | 100 | 100 | 93 | 79 | 100 | 39 | 100 | 100 | 100 | 100 |
| Proportion of monofunctional polymerizable compound | | | | | 95 | 95 | 88 | 95 | 95 | 95 | 95 | 95 | 95 | 95 |
| Evaluation | Peel strength | | | | 4 | 4 | 2 | 2 | 2 | 0 | 0 | 0 | 1 | 1 |

As shown in Tables 1 and 2, in Examples 1 to 13, since the manufacturing method of a laminate includes a step of applying an ink onto a base material for image recording, which contains a polymer including vinyl chloride as a constitutional unit, by an ink jet recording method to record an image, and a step of disposing a base material for lamination, which contains a polymer including vinyl chloride as a constitutional unit, over the image for lamination, in which the ink contains a polymerizable monomer A having a molecular weight of 215 or less, having a solubility parameter of 16.5 $MPa^{1/2}$ to 21.3 $MPa^{1/2}$, and having a (meth)acryloyl group, and contains an N-vinyl compound, and a weighted average value of glass transition temperatures in a case where all polymerizable monomers contained in the ink are homopolymers is 0°C to 100°C, it was found that the peel strength was high and the adhesiveness between the base material and the image was excellent.

On the other hand, in Comparative Examples 1 and 2, it was found that the ink did not contain the polymerizable monomer A, and thus the adhesiveness between the base material and the image was deteriorated.

In Comparative Example 3, it was found that the N-vinyl compound was not contained, and thus the adhesiveness between the base material and the image was deteriorated.

In Comparative Example 4, it was found that the weighted average value of the glass transition temperatures in a case where all polymerizable monomers contained in the ink were homopolymers was lower than 0°C, and thus the adhesiveness between the base material and the image was deteriorated.

In Comparative Example 5, it was found that the weighted average value of the glass transition temperatures in a case where all polymerizable monomers contained in the ink were homopolymers was higher than 100°C, and thus the adhesiveness between the base material and the image was deteriorated.

In Example 5, it was found that the mass ratio of the content of the N-vinyl compound to the content of the polymerizable monomer A was 0.35 or more, and thus the peel strength was higher as compared with Example 6.

In Example 3, it was found that the mass ratio of the content of the N-vinyl compound to the content of the polymerizable monomer A was 0.5 or more, and thus the peel strength was higher as compared with Example 5.

In Example 3, it was found that the proportion of the polymerizable monomer having a molecular weight of 205 or less with respect to all polymerizable compounds contained in the ink was 80% by mass or more, and thus the peel strength was higher as compared with Example 12.

In Example 3, it was found that the proportion of the monofunctional polymerizable compound with respect to all polymerizable compounds contained in the ink was 90% by mass or more, and thus the peel strength was higher as compared with Example 11.

In Example 3, it was found that the ink contained at least one selected from the group consisting of the vinyl chloride-vinyl acetate copolymer and the polyester resin, and thus the peel strength was higher than as compared with Example 8.

In Example 3, it was found that the ink did not contain the surfactant, and thus the peel strength was higher as compared with Example 7.

[Examples 101 to 105]

<Preparation of ink>

The above-described cyan pigment dispersion liquid and components other than the components contained in the cyan pigment dispersion liquid, which are described in Table 4, were mixed so as to have the contents described in Table 4, thereby preparing an ink.

The details of resins T1 to T4 in Table 3 are as follows. The resins T1 to T4 were synthesized with reference to synthesis methods of Examples 8, 9, 25, and 19 of JP6861811B. All of the resins T1 to T4 had a weight-average molecular weight of 10,000.

Table 3 shows compositional ratios (mass ratios) and SP values of the constitutional units constituting each resin.

[Table 3]

| | | | | | |
|---|---|---|---|---|---|
| Resin T1 | Structure | 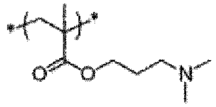 | 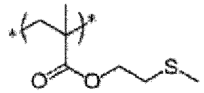 | 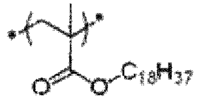 | |
| | Compositional ratio | 57 | 5 | 38 | |
| | SP value (MPa$^{1/2}$) | 18.3 | 19 | 17 | |
| Resin T2 | Structure | 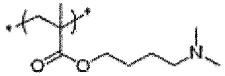 | 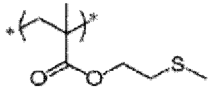 | 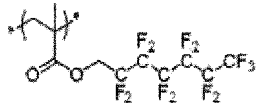 | |
| | Compositional ratio | 57 | 5 | 38 | |
| | SP value (Mpa$^{1/2}$) | 18.1 | 19 | 14.8 | |
| Resin T3 | Structure | 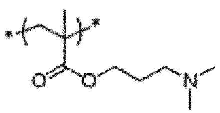 | 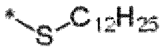 | 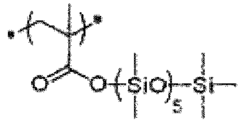 | |
| | Compositional ratio | 57 | 5 | 38 | |
| | SP value (MPa$^{1/2}$) | 18.3 | 17 | 14.2 | |
| Resin T4 | Structure | 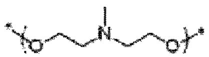 | 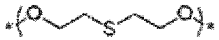 | 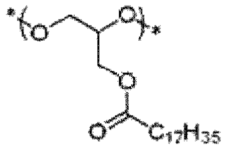 | 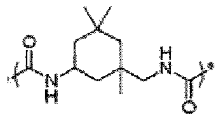 |
| | Compositional ratio | 11 | 5 | 33 | 51 |
| | SP value (MPa$^{1/2}$) | 21.8 | 20.4 | 17.2 | 23.8 |

<Production of laminate>

An image recorded material was obtained by the same image recording step as in Example 1.

-Laminating step 2-

In the laminating step 2, a laminate was obtained under conditions different from those in the laminating step 1, using the obtained image recorded material.

Specifically, a temperature in the thermocompression bonding was set to 130°C, and the thermocompression bonding was carried out at a pressure of 2 MPa for 300 seconds and then at a pressure of 4 MPa for 60 seconds.

A peel strength 2 was measured using an evaluation sample of the laminate, obtained in the laminating step 2. The evaluation method is the same as the evaluation method for the evaluation sample of the laminate, obtained in the laminating step 1.

The evaluation results are shown in Table 4.

The ink used in Example 101 is the same as the ink used in Example 2, and only the laminating step in the production of the laminate is different.

[Table 4]

| | | SP value | Molecular weight | Tg (°C) | Example 101 | Example 102 | Example 103 | Example 104 | Example 105 |
|---|---|---|---|---|---|---|---|---|---|
| Polymerizable monomer A | THFA | 18.8 | 156 | -15 | 40 | 40 | 40 | 40 | 40 |
| | EOEOEA | 18.2 | 188 | -54 | 5.35 | 5.35 | 5.35 | 5.35 | 5.35 |
| | CTFA | 19.0 | 200 | 32 | 545 | 8.15 | 8.15 | 8.15 | 8.15 |
| N-vinyl compound | NVC | 19.2 | 139 | 90 | 30 | 30 | 30 | 30 | 30 |
| | Vmox | 20.6 | 127 | 140 | - | - | - | - | - |
| Other polymerizable compounds | DVE-3 | 17.2 | 202 | 10 | 4.15 | 4.15 | 4.15 | 4.15 | 4.15 |
| Colorant | Cyan pigment | - | | | 2.49 | 2.49 | 2.49 | 2.49 | 2.49 |
| Dispersant | BYK-168 | - | | | 1.66 | 1.66 | 1.66 | 1.66 | 1.66 |
| Polymerization initiator | ITX | - | | | 2 | 2 | 2 | 2 | 2 |
| | Omni. 819 | - | | | 2.8 | 2.8 | 2.8 | 2.8 | 2.8 |
| | Omni. TPO-H | - | | | 2.8 | 2.8 | 2.8 | 2.8 | 2.8 |
| Polymerization inhibitor | TEMPOL | - | | | 0.3 | 0.3 | 0.3 | 0.3 | 0.3 |
| Surfactant | Tegorad 2010 | - | | | - | - | - | - | - |
| Resin | Polyester resin A | - | | | 3 | - | - | - | - |
| | Resin T1 | - | | | - | 0.3 | - | - | - |
| | Resin T2 | - | | | - | - | 0.3 | - | - |
| | Resin T3 | - | | | - | - | - | 0.3 | - |
| | Resin T4 | - | | | - | - | - | - | 0.3 |
| Weighted average value of Tg | | | | | 23.9 | 24.1 | 24.1 | 24.1 | 24.1 |
| N-vinyl compound/polymerizable monomer A | | | | | 0.59 | 0.56 | 0.56 | 0.56 | 0.56 |
| Proportion of polymerizable monomer having molecular weight of 205 or less | | | | | 100 | 100 | 100 | 100 | 100 |

(continued)

| | | SP value | Molecular weight | Tg (°C) | Example 101 | Example 102 | Example 103 | Example 104 | Example 105 |
|---|---|---|---|---|---|---|---|---|---|
| Proportion of monofunctional polymerizable compound | | | | | 95 | 95 | 95 | 95 | 95 |
| Evaluation | Peel strength 2 | | | | 3 | 5 | 5 | 5 | 5 |

In Examples 102 to 105, it was found that the ink contained the resin T including at least one group selected from the group consisting of a fluorinated hydrocarbon group, a polysiloxane group, and a hydrocarbon group having 12 or more carbon atoms, and thus the peel strength was higher as compared with Example 101.

The disclosure of JP2022-162750 filed on October 7, 2022 and the disclosure of JP2023-108852 filed on June 30, 2023 are incorporated in the present specification by reference. **In** addition, all documents, patent applications, and technical standards described in the present specification are herein incorporated by reference to the same extent that each individual document, patent application, or technical standard was specifically and individually indicated to be incorporated by reference.

## Claims

**1.** A manufacturing method of a laminate, comprising:

a step of applying an ink onto a base material for image recording, which contains a polymer including vinyl chloride as a constitutional unit, by an ink jet recording method to record an image; and
a laminating step of disposing a base material for lamination, which contains a polymer including vinyl chloride as a constitutional unit, over the image,
wherein the ink contains a polymerizable monomer A having a (meth)acryloyl group, having a molecular weight of 215 or less, and having a solubility parameter of 16.5 $MPa^{1/2}$ to 21.3 $MPa^{1/2}$ , and contains an N-vinyl compound, and
a weighted average value of glass transition temperatures in a case where all polymerizable monomers contained in the ink are homopolymers is 0°C to 100°C.

**2.** The manufacturing method of a laminate according to claim 1,
wherein a mass ratio of a content of the N-vinyl compound to a content of the polymerizable monomer A is 0.35 or more.

**3.** The manufacturing method of a laminate according to claim 1 or 2,
wherein a mass ratio of a content of the N-vinyl compound to a content of the polymerizable monomer A is 0.5 or more.

**4.** The manufacturing method of a laminate according to claim 1 or 2,
wherein a proportion of a polymerizable monomer having a molecular weight of 205 or less with respect to all polymerizable compounds contained in the ink is 80% by mass or more.

**5.** The manufacturing method of a laminate according to claim 1 or 2,
wherein a proportion of a monofunctional polymerizable compound with respect to all polymerizable compounds contained in the ink is 90% by mass or more.

**6.** The manufacturing method of a laminate according to claim 1 or 2,
wherein the polymerizable monomer A includes at least one selected from the group consisting of cyclic trimethylolpropane formal acrylate and ethoxydiethylene glycol acrylate.

**7.** The manufacturing method of a laminate according to claim 1 or 2,
wherein the ink further contains at least one selected from the group consisting of a vinyl chloride-vinyl acetate copolymer and a polyester resin.

**8.** The manufacturing method of a laminate according to claim 1 or 2,
wherein the ink further contains a resin T which includes at least one group selected from the group consisting of a fluorinated hydrocarbon group, a polysiloxane group, and a hydrocarbon group having 12 or more carbon atoms.

**9.** The manufacturing method of a laminate according to claim 8,
wherein the resin T includes a constitutional unit derived from a polymerizable monomer having a solubility parameter of 16.5 $MPa^{1/2}$ to 24.0 $MPa^{1/2}$.

**10.** The manufacturing method of a laminate according to claim 1 or 2,
wherein the ink contains no surfactant, or a content of a surfactant is less than 0.1% by mass with respect to the total amount of the ink.

**11.** The manufacturing method of a laminate according to claim 1 or 2,
wherein, in the laminating step, the image and the base material for lamination are subjected to thermocompression bonding at a temperature of 100°C or higher.

**12.** The manufacturing method of a laminate according to claim 1 or 2,
wherein, in the laminating step, the image and the base material for lamination are laminated to be superimposed on each other such that the image and the base material for lamination come into contact with each other.

**13.** An ink jet ink comprising:

a polymerizable monomer A which has a (meth)acryloyl group, has a molecular weight of 215 or less, and has a solubility parameter of 16.5 $MPa^{1/2}$ to 21.3 $MPa^{1/2}$; and
an N-vinyl compound,
wherein a weighted average value of glass transition temperatures in a case where all polymerizable monomers contained in the ink jet ink are homopolymers is 0°C to 100°C, and
a mass ratio of a content of the N-vinyl compound to a content of the polymerizable monomer A is 0.35 or more.

**14.** The ink jet ink according to claim 13,
wherein the mass ratio of the content of the N-vinyl compound to the content of the polymerizable monomer A is 0.5 or more.

**15.** The ink jet ink according to claim 13,
wherein a proportion of a polymerizable monomer having a molecular weight of 205 or less with respect to all polymerizable compounds contained in the ink jet ink is 80% by mass or more.

**16.** The ink jet ink according to claim 13,
wherein a proportion of a monofunctional polymerizable compound with respect to all polymerizable compounds contained in the ink jet ink is 90% by mass or more.

**17.** The ink jet ink according to claim 13,
wherein the polymerizable monomer A includes at least one selected from the group consisting of cyclic trimethylolpropane formal acrylate and ethoxydiethylene glycol acrylate.

**18.** The ink jet ink according to claim 13, further comprising:
at least one selected from the group consisting of a vinyl chloride-vinyl acetate copolymer and a polyester resin.

**19.** The ink jet ink according to claim 13, further comprising:
a resin T including at least one group selected from the group consisting of a fluorinated hydrocarbon group, a polysiloxane group, and a hydrocarbon group having 12 or more carbon atoms.

**20.** The ink jet ink according to claim 19,
wherein the resin T includes a constitutional unit derived from a polymerizable monomer having a solubility parameter of 16.5 $MPa^{1/2}$ to 24.0 $MPa^{1/2}$.

**21.** The ink jet ink according to claim 13,
wherein the ink jet ink contains no surfactant, or a content of a surfactant is less than 0.1% by mass with respect to the total amount of the ink jet ink.

**22.** An image recording method comprising:
a step of applying the ink jet ink according to any one of claims 13 to 21 onto a base material for image recording, which

contains a polymer including vinyl chloride as a constitutional unit, by an ink jet recording method to record an image.

**INTERNATIONAL SEARCH REPORT**

International application No. **PCT/JP2023/034359**

**A. CLASSIFICATION OF SUBJECT MATTER**

***B41M 5/00***(2006.01)i; ***B32B 27/00***(2006.01)i; ***B32B 27/30***(2006.01)i; ***B32B 38/14***(2006.01)i; ***B41J 2/01***(2006.01)i; ***C08F 2/44***(2006.01)i; ***C08F 220/10***(2006.01)i; ***C08J 7/04***(2020.01)i; ***C09D 11/30***(2014.01)i; ***C09D 11/38***(2014.01)i

FI: B41M5/00 100; C09D11/38; C08F2/44 C; C08F220/10; B32B27/00 E; B41J2/01 501; B41M5/00 120; B41M5/00 112; B32B38/14; C08J7/04 Z; C09D11/30; B32B27/30 101

According to International Patent Classification (IPC) or to both national classification and IPC

**B. FIELDS SEARCHED**

Minimum documentation searched (classification system followed by classification symbols)

B41M5/00; B32B27/00; B32B27/30; B32B38/14; B41J2/01; C08F2/44; C08F220/10; C08J7/04; C09D11/30; C09D11/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-105156 A (RICOH CO LTD) 26 July 2021 (2021-07-26) paragraphs [0066]-[0095] | 13-16, 21, 22 |
| A | | 1-12, 17-20 |
| X | JP 2020-128483 A (SEIKO EPSON CORP) 27 August 2020 (2020-08-27) paragraphs [0111]-[0112], [0114]-[0125] | 13-16, 21, 22 |
| A | | 1-12, 17-20 |
| X | JP 2010-235914 A (TOYO INK MFG CO LTD) 21 October 2010 (2010-10-21) paragraphs [0003], [0060]-[0078] | 13-16, 21, 22 |
| A | | 1-12, 17-20 |
| X | JP 2009-191183 A (FUJIFILM CORP) 27 August 2009 (2009-08-27) paragraphs [0114]-[0146] | 13-16, 21, 22 |
| A | | 1-12, 17-20 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 October 2023** | **07 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/034359

C. DOCUMENTS CONSIDERED TO BE RELEVANT

| Category* | Citation of document, with indication, where appropriate, of the relevant passages | Relevant to claim No. |
|---|---|---|
| P, A | JP 2023-83727 A (SEIKO EPSON CORP) 16 June 2023 (2023-06-16) paragraphs [0017]-[0060], [0102]-[0105] | 1-22 |

Form PCT/ISA/210 (second sheet) (January 2015)

**INTERNATIONAL SEARCH REPORT**
**Information on patent family members**

International application No.
**PCT/JP2023/034359**

| Patent document cited in search report | Publication date (day/month/year) | Patent family member(s) | Publication date (day/month/year) |
| --- | --- | --- | --- |
| JP 2021-105156 A | 26 July 2021 | US 2022/0403187 A1<br>paragraphs [0183]-[0303]<br>CN 114729209 A | |
| JP 2020-128483 A | 27 August 2020 | US 2020/0255677 A1<br>paragraphs [0109]-[0110], [0112]-[0149]<br>CN 111548677 A | |
| JP 2010-235914 A | 21 October 2010 | US 2010/0233448 A1<br>paragraphs [0005], [0078]-[0145]<br>EP 2228416 A1<br>CN 101831214 A | |
| JP 2009-191183 A | 27 August 2009 | (Family: none) | |
| JP 2023-83727 A | 16 June 2023 | US 2023/0174809 A1<br>paragraphs [0016]-[0061], [0103]-[0104]<br>CN 116218282 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021161182 A
- JP 2002012607 A
- JP 2002188025 A
- JP 2003026978 A
- JP 2003342503 A
- JP 2011225848 A
- JP 2009209352 A
- JP 54059936 A
- JP 2003306623 A
- JP 60132767 A
- JP 6861811 B
- JP 2022162750 A
- JP 2023108852 A


### Non-patent literature cited in the description


- Industrial Organic Pigments. **W. HERBST** ; **K. HUNGER**. Encyclopedia of Pigments. 2000